# EUROPÄISCHE PATENTSCHRIFT

(11) **EP 0 581 841 B1**
(45) Veröffentlichungstag und Bekanntmachung des Hinweises auf die Patenterteilung: **27.09.1995**
(21) Anmeldenummer: 92909857.2
(22) Anmeldetag: 23.04.1992
(51) Int. Cl.: H02K 9/18, H02K 19/36, H02K 11/00, F03B 13/10

(54) **ERREGEREINRICHTUNG FÜR EINEN ROHRTURBINEN-SYNCHRONGENERATOR**
EXCITING DEVICE FOR A TUBULAR TURBINE SYNCHRONOUS GENERATOR
SYSTEME D'EXCITATION POUR ALTERNATEUR SYNCHRONE A TURBINE BULBE

(30) Priorität: 24.04.1991 AT 852/91
(43) Veröffentlichungstag der Anmeldung: 09.02.1994
(73) Patentinhaber: ELIN ENERGIEVERSORGUNG GESELLSCHAFT m.b.H., 1141 Wien (AT)
(72) Erfinder: REITINGER, Gottfried, A-1170 Wien (AT)
(74) Vertreter: Krause, Peter
(86) Internationale Anmeldenummer: AT9200055
(87) Internationale Veröffentlichungsnummer: WO9220134

(56) Entgegenhaltungen:
- WO-A-90/05403
- FR-A- 1 043 086
- PATENT ABSTRACTS OF JAPAN vol. 8, no. 250 (E-279)(1687) 16. November 1984 & JPA 59127568

## Beschreibung

Die Erfindung betrifft eine Erregereinrichtung mit fremdgekühlten, statischen Stromrichterelementen für einen Rohrturbinengenerator, die in der Turbinenkuppel angeordnet ist und die Kühlkörper der von einem Transformator gespeisten Stromrichterelemente indirekt vom Flußwasser gekühlt sind.

Aus der FR-A-1043 086 ist ein Rohrturbinen-Synchrongenerator bekannt, dessen Erregungseinrichtung fremdgekühlte Stromrichterelemente aufweist. Die über einen Transformator gespeisten Stromrichterelemente mit ihren entsprechenden Kühlkörpern sind in der vom Flußwasser umspülten Rohrturbinenkuppel angeordnet. Nachteilig dabei ist, daß die Kühlung durch die natürliche Luftkonvektion nur bei kleinen Leistungen möglich ist.

Für höhere Leistungen wird eine forcierte Luftkühlung angewendet. Hierzu wird in der Regel ein über einen Motor angetriebenes Gebläse eingesetzt. Die Stromrichter selbst sind in Niederspannungsschränken eingebaut, die gemeinsam mit den Reglerschränken an einer geeigneten Stelle des Kraftwerkes angeordnet sind.

Natürlich ist es auch bekannt, daß die Stromrichter über eigene wassergekühlte Wärmetauscher gekühlt werden.

Eine direkte Wasserkühlung der Stromrichterelemente von Erregereinrichtungen, wie dies beispielsweise bei Hochspannungs-Gleichstrom-Übertragungsanlagen vorgesehen wird, ist bei Erregerstromrichtern nicht zweckmäßig und auch nicht wirtschaftlich, wodurch sich diese Lösung auch nicht durchgesetzt hat.

Die aber weitverbreiteste Kühlung für Stromrichter, nämlich die Gebläsekühlung, hat bei Kraftwerken, die mit Rohrturbinengeneratoren ausgestattet sind, gravierende Nachteile aufzuweisen. So ist der Lüfter des Gebläses der einzige rotierende Teil einer ansonsten statischen Erregung. Ferner ist auch der finanzielle Aufwand für das Gebläse nicht zu übersehen. Neben den Anschaffungskosten sind auch dessen Verluste zu bewerten. Darüberhinaus muß das Gebläse auch gewartet werden. Ein nicht zu unterschätzender Nachteil ist aber darin gelegen, daß der Ausfall des Gebläses die Stillsetzung des Maschinensatzes zur Folge hat.

Aufgabe der Erfindung ist es, eine Erregungseinrichtung für einen Rohrturbinen-Synchrongenerator der eingangs zitierten Art zu schaffen, der einerseits die obigen Nachteile vermeidet und andererseits eine wirtschaftlich günstigere Auslegung bei erhöhter Betriebssicherheit gewährleistet.

Die Erfindung ist dadurch gekennzeichnet, daß die Stromrichterelemente entweder über einen Zwischenkreis am Generatorkühlsystem oder direkt an der Innenseite der Rohrturbinenkuppel angeordnet sind. Da in der Birne des Turbogenerators an sich eigentlich kein Platzmangel herrscht, ist diese technisch einfache Lösung von großem Vorteil. Bei der Berechnung der Wirtschaftlichkeit können die Kosten für die Anschaffung des Gebläses sowie die der Verluste und der Wartung außer Betracht bleiben. Ferner ist auch durch den Wegfall eines Störfaktors eine größere Betriebssicherheit gegeben. Auch ein Teil der Schaltschränke in der Warte muß nicht mehr vorgesehen werden.

Gemäß einer weiteren besonderen Ausgestaltung der Erfindung sind die Kühlkörper direkt an der Innenseite der Rohrturbinenkuppel, vorzugsweise an ihrer Spitze, angeordnet. Außer den bereits erwähnten Vorteilen sind auch die bei dieser Ausgestaltung der Erfindung erforderlichen kurzen Leitungsverbindungen des Gleichstromkreises für die Bürstenanordnung hervorzuheben.

Nach einem weiteren Merkmal der Erfindung ist zur Speisung der Stromrichterelemente ein Transformator vorgesehen, der in der Rohrturbinenkuppel angeordnet ist. Da die Hochspannung in der Rohrturbinenkuppel sowieso vorhanden ist, wird kein weiteres Risiko von der elektrischen Seite eingegangen. Darüberhinaus werden weitere Anlagen, die üblicherweise in der bzw. in der Nähe der Schaltwarte vorgesehen sind, nicht mehr notwendig. Den Erregertransformator in der Birne vorzusehen, hat somit enorme wirtschaftliche Vorteile.

Nach einem weiteren Merkmal der Erfindung sind die für die Regelung der Erregungseinrichtung vorgesehenen Leitungen Lichtwellenleiterkabel, die von der Erregungseinrichtung in die Schaltwarte geführt sind. Der Vorteil besteht darin, daß bei Verwendung von Lichtwellenleitern auch in der Nähe von Hochspannungsleitungen und -geräten keinerlei Potentialschwierigkeiten und Probleme mit elektro-magnetischen Feldern auftreten.

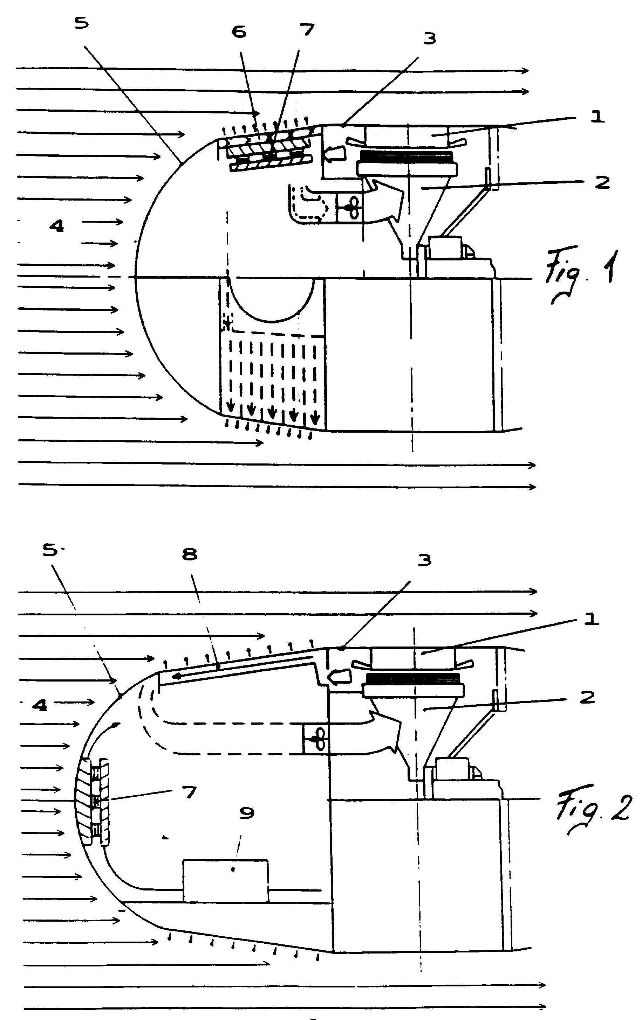

Die Erfindung wird an Hand von Ausführungsbeispielen, die in der Zeichnung dargestellt sind, näher erläutert. Fig. 1 zeigt einen Rohrturbinen-Synchrongenerator mit einem Zwischenkühlkreis und Fig. 2 mit einer Rippenkühlung.

Gemäß der Fig. 1 ist ein Rohrturbinen-Synchrongenerator mit seinem Ständer 1 und seinem Rotor 2 im Rohrturbinengehäuse 3 angeordnet. Das Rohrturbinengehäuse 3 ist an der dem anströmenden Triebwasser 4 zugewandten Seite durch die Rohrturbinenkuppel 5 abgeschlossen. In der Rohrturbinenkuppel 5 sind Einrichtungen wie Ölzuführungsblock, Energieausleitungen mit Stromwandlern, Schleifringe oder auch die Erregermaschine und natürlich die Kühleinrichtungen für den Generator untergebracht. In diesem dargestellten Fall ist eine Generatorkühlung mit einem Zwischenkreis 6 vorgesehen. Bei diesem Kühlsystem wird der wesentlich bessere Wärmeübergang von Wasser auf Stahl ausgenützt. Die Verluste werden über Luft-Wasserkühler an ein geschlossenes Kühlsystem und von diesem über Wasserkanäle an der Kuppelinnenseite ans Triebwasser 4 abgeführt. Dieser gute Kühleffekt wird für die Kühlung der Stromrichterelemente 7 ausgenützt. Die über einen in der Schaltwarte befindlichen Transformator gespeisten Stromrichterelemente 7 sind mit ihren entsprechenden Kühlkörpern in der vom Flußwasser 4 umspülten Rohrturbinenkuppel 5 angeordnet und zwar direkt am Zwischenkreis 6 der Generatorkühlung. So werden die Kühlkörper der Stromrichterelemente 7 indirekt vom Flußwasser 4 gekühlt.

Gemäß der Fig. 2 ist der Rohrturbinen-Synchrongenerator mit seinem Ständer 1 und seinem Rotor 2 im Rohrturbinengehäuse 3 angeordnet. In diesem Fall wird die im Ständer 1 und im Läufer 2 erwärmte Kühlluft über die Innenwand des Rohrturbinengehäuses 3 rückgekühlt. Kühlrippen 8 aus Stahl oder Kupfer vergrößern die Kühlfläche und kompensieren so den schlechten Wärmeübergang von Luft auf Metall. Um auch in diesem Fall einen guten Kühleffekt für die Stromrichterelemente 7 zu erhalten, sind deren Kühlkörper direkt an der Innenseite der Rohrturbinenkuppel 5 und zwar an ihrer Spitze angeordnet.

Zur Speisung der Stromrichterelemente 7 ist ein Transformator 9 vorgesehen, der ebenfalls in der Rohrturbinenkuppel 5 angeordnet ist. Die für die Erregungseinrichtung vorgesehenen Leitungen - die nicht dargestellt sind - sind Lichtwellenleiterkabel, die von der Erregungseinrichtung in die Schaltwarte geführt sind.

## Patentansprüche

1. Erregereinrichtung mit fremdgekühlten, statischen Stromrichterelementen (7) für einen Rohrturbinengenerator, die in der Turbinenkuppel (5) angeordnet ist und die Kühlkörper der von einem Transformator (9) gespeisten Stromrichterelemente (7) indirekt vom Flußwasser (4) gekühlt sind, dadurch gekennzeichnet, daß die Stromrichterelemente (7) entweder über einen Zwischenkreis (6) am Generatorkühlsystem oder direkt an der Innenseite der Rohrturbinenkuppel angeordnet sind.

2. Erregereinrichtung nach Anspruch 1, dadurch gekennzeichnet, daß die Kühlkörper direkt an der Innenseite der Spitze der Rohrturbinenkuppel (5) angeordnet sind.

3. Erregereinrichtung nach Anspruch 1 oder 2, dadurch gekennzeichnet, daß der zur Speisung der Stromrichterelemente (7) vorgesehene Transformator (9) in der Rohrturbinenkuppel (5) angeordnet ist.

4. Erregereinrichtung nach einem oder mehreren der Ansprüche 1 bis 3, dadurch gekennzeichnet, daß die für die Regelung der Erregungseinrichtung vorgesehenen Leitungen Lichtwellenleiterkabel sind, die von der Erregungseinrichtung in die Schaltwarte geführt sind.

## Claims

1. Exciter device having separately cooled, static converter elements (7) for a tubular turbine generator, which exciter device is arranged in the turbine dome (5), and the heat sinks of the converter elements (7) fed from a transformer (9) are indirectly cooled by the river water (4), **characterised in that** the converter elements (7) are arranged either via an intermediate circuit (6) at the generator cooling system, or directly on the inner side of the tubular turbine dome.

2. Exciter device according to Claim 1, **characterised in that** the heat sinks are arranged directly on the inner side of the tip of the tubular turbine dome (5).

3. Exciter device according to Claim 1 or 2, **characterised in that** the transformer (7) provided to supply the converter elements (7) is arranged in the tubular turbine dome (5).

4. Exciter device according to one or more of the Claims 1 to 3, **characterised in that** the conductors provided for the control of the exciter device are fibre optic cables that are run from the exciter device into the control room.

## Revendications

1. Dispositif excitateur avec des éléments redresseurs (7) statiques à refroidissement extérieur, pour un générateur de turbine bulbe immergée, disposé dans le dôme de turbine (5) et les corps de refroidissement des éléments redresseurs (7) alimentés par un transformateur (9) étant refroidis indirectement par l'eau du fleuve (4), caractérisé en ce que les éléments redresseurs (7) sont disposés soit par l'intermédiaire d'un circuit intermédiaire (6) sur le système de refroidissement du générateur, soit disposés directement en face intérieure de la coupole de turbine bulbe.

2. Dispositif excitateur selon la revendication 1, caractérisé en ce que les corps de refroidissement sont disposés directement en face intérieure de la pointe du dôme de turbine bulbe (5).

3. Dispositif excitateur selon la revendication 1 ou 2, caractérisé en ce que le transformateur (9) prévu pour l'alimentation des éléments redresseurs (7) est disposé dans le dôme de turbine bulbe (5).

4. Dispositif excitateur selon l'une ou plusieurs des revendications 1 à 3, caractérisé en ce que les lignes prévues pour la régulation du dispositif d'excitation sont des cables à guides d'ondes lumineuses, guidés dans la salle de commande, depuis le dispositif d'excitation.
